# EUROPEAN PATENT APPLICATION

(11) **EP 2 775 381 A2**
(43) Date of publication of application: **10.09.2014**
(21) Application number: 14158348.4
(22) Date of filing: 07.03.2014
(51) Int. Cl.: G06F 3/044

(54) **Wiring apparatus for touch screen panel**

(30) Priority: 08.03.2013 KR 20130025137
(71) Applicant: Samsung Electronics Co., Ltd., Suwon-si Gyeonggi-do 443-742 (KR)
(72) Inventor: Kim, Hak-Yeol, 443-742 Gyeonggi-do (KR); Kim, Dong-Sub, 443-742 Gyeonggi-do (KR); Kim, Min-Uk, 443-742 Gyeonggi-do (KR)
(74) Representative: Jenkins, Richard Gavin

(57) **Abstract**

A wiring apparatus for a touch screen panel is provided. The wiring apparatus includes a transparent window portion, at least one transparent substrate provided under the transparent window portion to comprise multiple electrodes, and at least one wiring portion comprising a plurality of wiring traces formed in a mesh pattern to be electrically connected with the electrodes and to vary a space therebetween.

## Description

### TECHNICAL FIELD

The present disclosure relates to a touch screen panel. More particularly, the present disclosure relates to a wiring apparatus for a touch screen panel in which a portion for wiring spacing is variable.

### BACKGROUND

Generally, the term portable communication device refers to a device that is capable of performing wireless communication with a counterpart device while being carried by a user. The portable communication device typically includes a display, an antenna device, an input/output device, and a data transmission/reception device.

With recent advances in multimedia and display technologies, the resolution of the display of the portable communication device has been improved. In line with these improvements, a Touch Screen Panel (TSP) for inputting data in a way to contact the display of the portable communication device by means of an input device such as a finger or a stylus pen has been increasingly adopted.

The touch screen panel may be roughly classified into a resistive type and a capacitive type. The resistive type detects a position based on a short-circuit between a glass layer and an electrode due to pressure exerted by an input device. The capacitive type detects a position by sensing a change in a capacitance between electrodes when a finger contacts the panel.

There are representative capacitive type touch screen panels which have been recently popularized, a mutual capacitance-type touch screen panel and a self capacitance-type touch screen panel.

A structure related to such a touch screen panel is disclosed in Korean Utility Model Registration No. 20-235,537 (published on April 12, 2012).

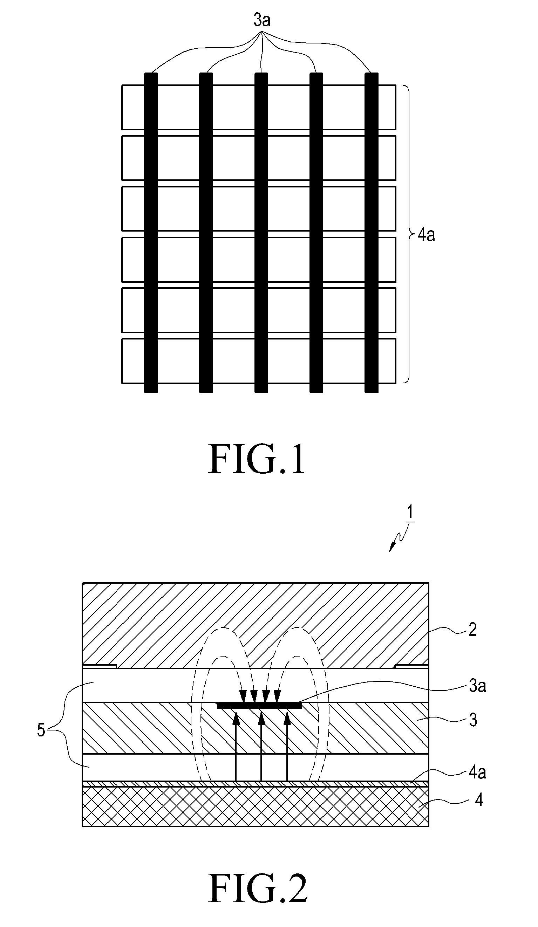

FIG. 1 illustrates a structure of a capacitive type touch screen panel according to the related art and FIG. 2 illustrates an operating state of a capacitive type touch screen panel according to the related art.

Referring to FIGS. 1 and 2, a mutual capacitance type touch screen panel 1 includes a transparent window portion 2 made of glass and/or plastic materials, a first transparent substrate 3 having a sensor electrode 3a under the transparent window portion 2, a second transparent substrate 4 including a drive electrode 4a provided under the first transparent substrate 3, and an insulating layer 5 provided between the transparent window portion 2 and the first transparent substrate 3 and between the first transparent substrate 3 and the second transparent substrate 4 to prevent the drive electrode 4a and the sensor electrode 3a from contacting each other. Herein, the first transparent substrate 3 and the second transparent substrate 4 may include Indium Tin Oxide (ITO) layers.

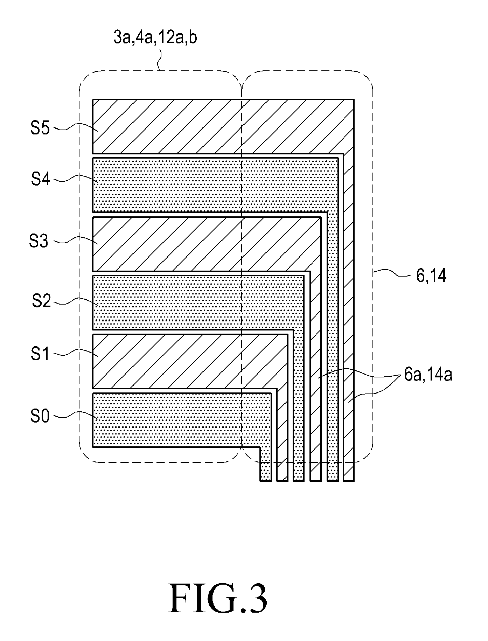

FIG. 3 illustrates a wiring structure of a capacitive type touch screen panel according to the related art.

Referring to FIG. 3, capacitive type touch screen panels may include respective electrodes and wiring portions. As the wiring portion occupies a large area, the driving accuracy of each electrode is degraded.

More specifically, as illustrated in FIG. 3, if a sheet resistance of the electrodes is 200Ω/Sq, a line width is 0.05mm, and a vertical space between the electrodes is 5mm, then a line resistance of the shortest electrode S0 is 5*100/0.05=10kΩ and a line resistance of the longest electrode S5 is 30*100/0.05=60kΩ, such that a line resistance difference between the two electrodes is 50kΩ.

As such, due to the line resistance difference between the wiring portions, the performance of a product is degraded.

Moreover, as in FIG. 3, comparing lengths of wiring portions 6 and 14 of capacitive type touch screen panels 1 and 10, the length of the shortest electrode S0 is 6 times shorter than the length of the longest electrode S5, such that if the line widths of the wiring portions 6a and 14a are the same as each other, the resistance of the shortest electrode S0 is also 6 times smaller than that of the longest electrode S5, increasing a resistance difference between the drive electrodes 4a and 12a and the sensor electrodes 3a and 12b and thus further degrading the performance of the product.

Moreover, as illustrated in FIG. 3, the wiring portions 6a and 14a of the touch screen panels 1 and 10 are configured to be in straight lines. That is, the wiring portions of the drive electrode and the sensor electrode are formed such that a line space between the shortest straight-line wiring portion and the longest straight-line wiring portion is large. As a result, the electrodes and the straight-line wiring portions are easily seen and distinguished by the user.

To overcome the foregoing shortcomings, a need exists for an apparatus in which the wiring portion space between the drive electrode and the sensor electrode is variable and is reduced to reduce a resistance difference between the electrodes, and the wiring portions of the electrodes are prevented from being noticed by naked eyes.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a wiring apparatus for a touch screen panel, in which at least one wiring portion is configured in a mesh pattern to be electrically connected with electrodes and configured to vary a space therebetween, such that a resistance difference between the electrodes is reduced and accuracy of the electrodes is improved, and thus touch capabilities of a product, such as a recognition area and a recognition speed, are further enhanced.

Another aspect of the present disclosure is to provide a wiring apparatus for a touch screen panel, in which at least one wiring portion is configured in a mesh pattern to be electrically connected with electrodes and configured to vary a space therebetween, such that the wiring portions are prevented from being seen to address the visibility problem of a product and thus to improve the utilization of the product.

In accordance with an aspect of the present disclosure, a wiring apparatus for a display is provided. The wiring apparatus includes a window portion, at least one substrate provided under the window portion to comprise multiple electrodes, and at least one wiring portion comprising a plurality of wiring traces formed to be electrically connected with the electrodes and to vary a space therebetween.

In accordance with another aspect of the present disclosure, a wiring apparatus for a touch screen panel is provided. The wiring apparatus includes a transparent window portion, at least one transparent substrate provided under the transparent window portion to comprise multiple electrodes, and at least one wiring portion comprising a plurality of wiring traces formed in a mesh pattern to be electrically connected with the electrodes and to vary a space therebetween.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a structure of a capacitive type touch screen panel according to the related art;
FIG. 2 illustrates an operating state of a capacitive type touch screen panel according to the related art;
FIG. 3 illustrates a wiring structure of a capacitive type touch screen panel according to the related art;
FIG. 4 illustrates a wiring apparatus for a touch screen panel according to an embodiment of the present disclosure;
FIG. 5 is an enlarged view illustrating a wiring apparatus for a touch screen panel according to an embodiment of the present disclosure;
FIG. 6 is an enlarged view in which a wiring apparatus for a touch screen panel according to an embodiment of the present disclosure is exploded and disposed;
FIG. 7 is an enlarged view in which a wiring apparatus for a touch screen panel according to an embodiment of the present disclosure is disposed in a zigzag pattern;
FIG. 8 is an enlarged view illustrating an insertion groove formed in a wiring apparatus for a touch screen panel according to an embodiment of the present disclosure; and
FIG. 9 is an enlarged view illustrating a wiring apparatus for a touch screen panel according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

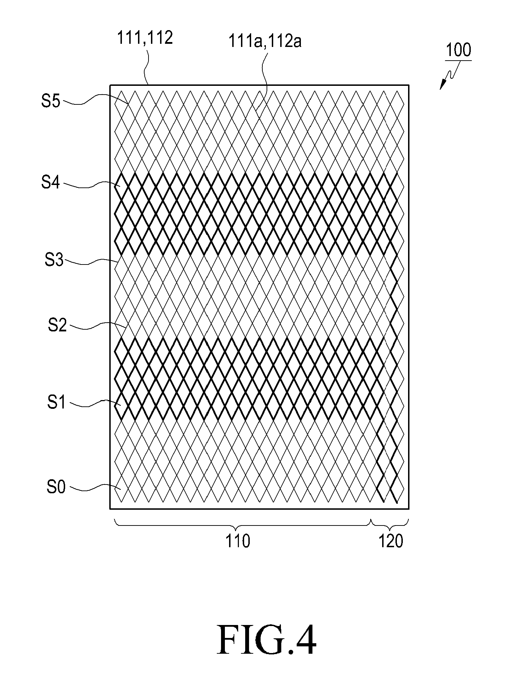

FIG. 4 illustrates a wiring apparatus for a touch screen panel according to an embodiment of the present disclosure.

Referring to FIG. 4, a wiring apparatus 100 may include at least one transparent substrate 110 having a transparent window portion (not illustrated) and multiple electrodes, and at least one wiring portion 120. The transparent window portion (not illustrated) is configured to provide the transparent substrate 110, described below, thereunder. The transparent window portion and the transparent substrate 110 may be made of one of plastic, glass, and film. The transparent window portion and the transparent substrate 110 may also be formed of materials other than plastic, glass, or film. The transparent substrate 110 may include a first transparent substrate 111 having a drive electrode 111a and a second transparent substrate 112 having a sensor electrode 112a, and is provided under the transparent window portion (not illustrated). The wiring portions 120 are configured in a metallic mesh pattern to be electrically connected with the drive electrodes 111a and the sensor electrodes 112a and configured to vary a space between the wiring portions 120. For example, the wiring portions 120 may include a plurality of wiring traces configured to vary a space there between and to be electrically connected with either a drive electrode 111a or a sensor electrode 112a. The wiring portions 120 configured in the mesh pattern are provided on the first transparent substrate 111 and the second transparent substrate 112. In an embodiment, the wiring portions 120 may be formed of Indium Tin Oxide (ITO).

The wiring portions 120 are configured in a metallic mesh pattern to vary a space therebetween, thereby reducing a resistance of each electrode when compared to a resistance of an existing electrode, such that touch capabilities of the drive electrodes 111a and the sensor electrodes 112a are improved and a space between the wiring portions 120 configured in the mesh pattern is reduced to prevent the wiring portions 120 from being seen, thus addressing the visibility problem of a product.

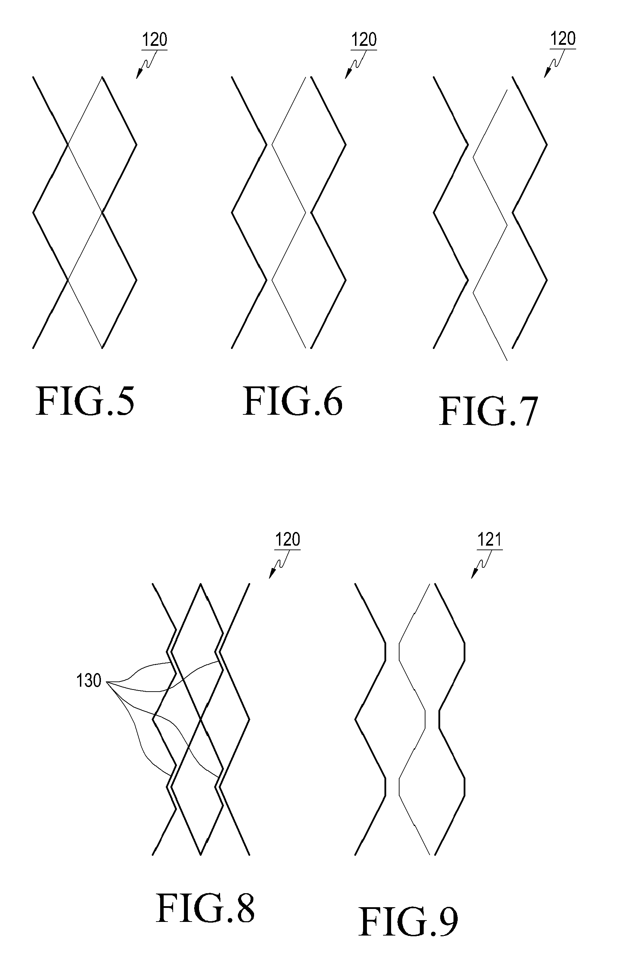

FIG. 5 is an enlarged view illustrating a wiring apparatus for a touch screen panel according to an embodiment of the present disclosure.

Referring to FIG. 5, the wiring portions 120 may be configured in a diamond-shape pattern. However, the wiring portions 120 may be configured in a pattern of other shapes than the diamond shape (for example, an oval shape, a triangular shape, or the like).

FIG. 6 is an enlarged view in which a wiring apparatus for a touch screen panel according to an embodiment of the present disclosure is exploded and disposed.

Referring to FIG. 6, the wiring portions 120 may also be formed in a diamond shape having edges spaced apart from each other. That is, the wiring portions 120 do not contact each other and are separated from each other to form a diamond shape having edges spaced apart from each other.

A portion in which the edges of the diamond shape of the wiring portions 120 meet each other may be in a straight line or a curved line.

A portion in which the wiring portions 120 meet each other may be changed in terms of an angle or a direction such that the wiring portions 120 are separated from each other.

Thus, the wiring portions 120 vary their widths such that the width differs therein. That is, the wiring portions 120 have a width that increases in a direction toward the center thereof and decreases in a direction away from the center thereof.

The space between the wiring portions 120 may be formed to be narrowed or widened and to be repeated.

FIG. 7 is an enlarged view in which a wiring apparatus for a touch screen panel according to an embodiment of the present disclosure is disposed in a zigzag pattern.

Referring to FIG. 7, the wiring portions 120 may be formed in a zigzag pattern to interlace each other such that the space between the wiring portions 120 is formed narrow.

FIG. 8 is an enlarged view illustrating an insertion groove formed in a wiring apparatus for a touch screen panel according to an embodiment of the present disclosure.

Referring to FIG. 8, an insertion groove 130 may be formed in a portion where the edges of the diamond shape meet each other, and the edge of the diamond shape may be inserted into the insertion groove 130 to narrow the space between the wiring portions 120.

FIG. 9 is an enlarged view illustrating the wiring portions 120 according to an embodiment of the present disclosure.

Referring to FIG. 9, the wiring portions 121 are formed in a gourd-shape pattern.

A process of manufacturing the touch screen panel will be described in more detail.

FIG. 4 illustrates the wiring apparatus 100 for the touch screen panel according to the present disclosure on the first transparent substrate 111 and the second transparent substrate 112.

That is, as illustrated in FIG. 4, the transparent substrate 110 includes the first transparent substrate 111 including the drive electrode 111a and the second transparent substrate 112 including the sensor electrode 112a, and the drive electrode 111a and the sensor electrode 112a are patterned in a metallic mesh pattern.

Referring again to FIG. 3, assuming that the sheet resistance of the drive electrode (4a and 12a of FIG. 3) and the sensor electrode (3a and 12b of FIG. 3) of a touch screen panel of the related art is 200Ω/Sq and a line space between the electrodes is 0.05mm, then a line resistance of the shortest electrode (S0 of FIG. 3) is 5*100/0.05=10kΩ and a line resistance of the longest electrode (S5 of FIG. 3) is 30*100/0.05=60kΩ, such that a line resistance difference between the two electrodes is 50kΩ. As a result, the performance of a product is degraded due to the line resistance difference between the wiring portions 6 and 14.

On the other hand, to overcome the foregoing drawbacks, the wiring portions 120 according to embodiments of the present disclosure are formed in a diamond-shape pattern and in a mesh pattern, in which the pattern is formed by connecting the edges of the diamond shape. If the line resistance of the wiring portion 120 is measured in this state, the line resistance of the shortest electrode S0 of the wiring portion 120 is 0.36kΩ and the line resistance of the longest electrode S5 of the wiring portion 120 is 2.16kΩ as illustrated in FIG. 4, such that the line resistance difference between the two electrodes is 1.8kΩ.

The line resistance difference between the wiring portions 6 and 14 of the related art is 50kΩ as mentioned above, and the line resistance difference between the wiring portions 120 according to the present disclosure is 1.8kΩ, thus remarkably reducing the difference in resistance.

Therefore, the wiring portions 120 formed in a mesh pattern having a small resistance difference vary and narrow the space therebetween, thus increasing the number of drive electrodes 111a and sensor electrodes 112a and being used for a large-area display unit (not illustrated) having large electrodes 111a and 112a.

Also, as illustrated in FIG. 3, the wiring portions 6 and 14 including the drive electrodes 4a and 12a and the sensor electrodes 3 a and 12b are formed in straight lines, such that when the user touches the window portion of the touch screen panels 1 and 10 of the related art, the electrodes and the straight-line wiring portions 6 and 14 are easily noticed.

Therefore, the present disclosure needs to narrow the space between the wiring portions 120 to address the visibility problem, such that the wiring portions 120 are formed in a mesh pattern and also in a diamond-shape pattern.

That is, to narrow the space between the wiring portions 120, the edges of the diamond shape need to be prevented from meeting each other. Thus, as illustrated in FIG. 6, the wiring portions 120 are formed such that the edges of the diamond shape are spaced apart from each other. In this case, the space between the wiring portions 120 is widened and thus may be seen a little.

Therefore, to address the foregoing shortcomings, as illustrated in FIG. 7, the wiring portions 120 are formed in a zigzag pattern to interlace with each other. That is, the wiring portions 120 are inserted between diamond shapes thereof and are disposed in a zigzag pattern, thereby narrowing the space between the wiring portions 120.

To narrow the space between the wiring portions 120, as illustrated in FIG. 8, the insertion groove 130 is formed in the portion where the edges of the diamond shape of the wiring portions 120 meet each other and the edge of the diamond shape of the wiring portions 120 is inserted into the insertion groove 130, thereby narrowing the space between the wiring portions 120.

According to another embodiment to narrow the space between the wiring portions 120, as illustrated in FIG. 9, the wiring portions 121 are formed in a gourd-shape pattern. That is, in the wiring portions 121 in the gourd-shape pattern, a portion in which the edges of the diamond shape meet each other is formed in a straight line, such that the overall shape of the wiring portion 121 is a gourd shape. As such, the wiring portions 121 in the gourd-shape pattern may narrow the space between the wiring portions 121.

Therefore, the wiring portions 120 according to the present disclosure are formed to have various wiring structures, thus addressing the visibility problem of the wiring portions 120 and narrowing the space between the wiring portions 120.

That is, the present disclosure forms the wiring portions 120 in a mesh pattern formed by repetition of a predetermined shape, thereby implementing a lower resistance than an existing electrode and thus further improving touch capabilities of a product, such as a recognition area, a recognition speed, and the like.

Moreover, the wiring apparatus (100 of FIG. 4) according to the present disclosure is applicable to a transparent substrate formed of various materials (for example, glass, acryl, film, and the like), to a window portion-integrated or display-integrated touch screen panel (not illustrated), and to a flexible display (not illustrated).

That is, the wiring apparatus (100 of FIG. 4) according to an embodiment of the present disclosure is applicable to the touch screen panel of a portable communication apparatus as a representative application example. However, the application is not limited to the portable communication apparatus and the application to any electronic device having a display may also be possible.

Examples of the electronic device according to the various embodiments of the present disclosure may include not only mobile communication terminals operating according to communication protocols corresponding to various communication systems, but also any information communication apparatuses and multimedia apparatuses such as Portable Multimedia Players (PMPs), MP3 players, navigation systems, game consoles, laptops, advertisement boards, Televisions (TVs), digital broadcasting players, Personal Digital Assistants (PDAs), smart phones, and so forth, and their application apparatuses.

Other effects that may be obtained or expected from embodiments of the present disclosure are explicitly or implicitly disclosed in the description of the embodiment of the present disclosure. That is, various effects expected from the embodiments of the present disclosure have been disclosed in the detailed description of the present disclosure.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A wiring apparatus (100) for a display, the wiring apparatus comprising:
a window portion;
at least one substrate (110) provided under the window portion to comprise multiple electrodes; and
at least one wiring portion comprising a plurality of wiring traces (120) formed to be electrically connected with the electrodes and to vary a space therebetween.

2. The wiring apparatus of claim 1, wherein the wiring portion (120) is formed in a metallic mesh pattern.

3. The wiring apparatus of claim 1, wherein the display comprises a touch screen panel or a Liquid Crystal Display (LCD).

4. The wiring apparatus of claim 1, wherein each of the window portion and the substrate are formed of one of plastic, glass, acryl, and film.

5. A wiring apparatus (100) for a touch screen panel, the wiring apparatus comprising:
a transparent window portion;
at least one transparent substrate (110) provided under the transparent window portion to comprise multiple electrodes; and
at least one wiring portions (120) comprising a plurality of wiring traces formed in a mesh pattern to be electrically connected with the electrodes and to vary a space therebetween.

6. The wiring apparatus of claim 5, wherein the transparent substrate comprises:
a first transparent substrate(111) comprising a drive electrode(111a); and
a second transparent substrate(112) comprising a sensor electrode(112a).

7. The wiring apparatus of claim 5, wherein the wiring traces (120) are formed in a diamond shape.

8. The wiring apparatus of claim 7, wherein the wiring traces (120) are formed such that edges of the diamond shape are spaced apart from each other.

9. The wiring apparatus of claim 7, wherein the wiring traces (120) are formed such that a portion in which the edges of the diamond shape meet each other is formed in a straight line or a curved line.

10. The wiring apparatus of claim 5, wherein the wiring traces (120) are spaced apart from each other by changing a portion in which the wiring portions meet each other at a predetermined angle or direction.

11. The wiring apparatus of claim 5, wherein the wiring traces (120) vary the widths thereof such that the widths differ therein.

12. The wiring apparatus of claim 5, wherein a space between the wiring traces (120) is repeatedly widened and narrowed.

13. The wiring apparatus of claim 5, wherein the wiring traces (120) are formed in a zigzag pattern to interlace with each other.

14. The wiring apparatus of claim 7, wherein the wiring traces (120) have an insertion groove in a portion where the edges of the diamond shape meet each other.

15. The wiring apparatus of claim 5, wherein the wiring traces (120) are formed in a gourd-shape pattern.

16. The wiring apparatus of claim 5, wherein the window portion (120) and the transparent substrate (110) are formed of one of plastic, glass, acryl, and film.

17. The wiring apparatus of claim 5, wherein the wiring traces are formed of a metallic material.
